# EUROPÄISCHE PATENTSCHRIFT

(11) **EP 1 813 967 B1**
(45) Veröffentlichungstag und Bekanntmachung des Hinweises auf die Patenterteilung: **23.09.2009**
(21) Anmeldenummer: 06026977.6
(22) Anmeldetag: 28.12.2006
(51) Int. Cl.: G01V 8/20

(54) **Lichtgitter**
Light curtain
Rideau de lumière

(30) Priorität: 26.01.2006 DE 102006003954
(43) Veröffentlichungstag der Anmeldung: 01.08.2007
(73) Patentinhaber: SICK AG, 79183 Waldkirch (DE)
(72) Erfinder: Schmitz, Stephan, Dr., 79108 Freiburg (DE); Hippenmeyer, Heinrich, 79348 Freiamt (DE); Zwölfer, Ulrich, 79341 Kenzingen (DE)
(74) Vertreter: Patentanwälte Westphal, Mussgnug & Partner

(56) Entgegenhaltungen:
- EP-A- 1 439 404
- EP-A- 1 637 477
- US-A1- 2001 040 213
- US-A1- 2005 052 639
- US-B2- 6 580 848

## Beschreibung

Die Erfindung betrifft ein Lichtgitter gemäß dem Oberbegriff des Patentanspruchs 1.

Lichtgitter weisen mehrere durch Lichtsender und Lichtempfänger definierte Lichtstrahlen auf und werden insbesondere zur Objekterkennung, zur Bestimmung der Höhe oder Länge von Objekten und zur Erfassung unregelmäßiger Objekte verwendet. Insbesondere zur Feldüberwachung, z. B. von Gefahrenbereichen ist es erforderlich, das Lichtgitter den unterschiedlichen Gegebenheiten und räumlichen Verhältnissen des zu überwachenden Bereichs anzupassen. Hierzu ist es aus der US 2001/0040213 A1 bekannt, ein Lichtgitter aus einzelnen Modulen aufzubauen, wobei jedes Modul ein geschlossenes Gehäuse aufweist, in welchem eine Sender- oder Empfängereinheit angeordnet ist. Die Module werden miteinander gekoppelt, um das Lichtgitter aufzubauen. Zur Anpassung an den jeweiligen Anwendungsfall ist es möglich, die Module linear oder abgewinkelt miteinander zu verbinden. Dabei ist eine starre Verbindung, eine Verbindung über flexible Kabel oder auch eine verschwenkbare Verbindung über eine drehbare Kupplung möglich. Die aneinander anschließenden Module werden dabei über eine galvanische Steckverbindung miteinander gekoppelt. Über diese Steckverbindung werden zum einen die Energie für die Speisung der Lichtsender und -empfänger übertragen und zum anderen die Signale zur Steuerung der Lichtsender und -empfänger und zur Verarbeitung der empfangenen Informationen. Die mechanischen Steckverbindungen für die galvanische Kopplung sind verschleißanfällig, insbesondere wenn diese Steckverbindungen drehbar ausgeführt sind.

Der Erfindung liegt die Aufgabe zugrunde, ein Lichtgitter der eingangs genannten Gattung so auszubilden, dass eine vielseitige Anpassung des Lichtgitters in einer robusten Ausführung möglich ist.

Diese Aufgabe wird erfindungsgemäß gelöst durch ein Lichtgitter mit den Merkmalen des Patentanspruchs 1.

Vorteilhafte Ausführungen der Erfindung sind in den Unteransprüchen angegeben.

Erfindungsgemäß wird ein optoelektronisches Lichtgitter aus einzelnen Modulen aufgebaut. Jedes Modul besitzt ein geschlossenes Gehäuse, in welchem sich die Sendereinheit bzw. Empfängereinheit befindet. Die einzelnen Module werden ohne galvanische Verbindung miteinander gekoppelt. Hierzu können induktive, kapazitive oder optische Übertrager verwendet werden. Über diese Übertrager wird die Versorgungsenergie für die Elektronik in das jeweilige Modul eingespeist. Weiter werden über diese Übertrager Signale und Daten übertragen, um die Funktion der Sender- und Empfängereinheiten zu steuern und um die von dem Lichtgitter erfassten Informationen an eine zentrale Verarbeitung zu übertragen.

An dem Gehäuse der Module sind jeweils Übertragerschnittstellen angeordnet, die als Anschlussflächen der Gehäuseaußenseite ausgebildet sind. Diese Anschlussflächen werden zur Koppelung der Module aneinander zur Anlage gebracht, wodurch sich die in den miteinander gekoppelten Modulen angeordneten Übertragerschnittstellen zu einem kompletten Übertrager ergänzen. Da keine galvanischen Steckkontakte vorhanden sind, sind diese Übertragerschnittstellen als glatte Oberflächen der Gehäuse ausgebildet, die gegen Schmutz, Feuchtigkeit und sonstige Umwelteinflüsse unempfindlich sind. Die Module und das aus diesen aufgebaute Lichtgitter ist daher besonders robust und auch für den Einsatz unter schwierigen Umgebungsbedingungen geeignet.

Die Module können als Sendermodule und Empfängermodule ausgebildet sein, die jeweils nur eine Einheit enthalten, d. h. nur Lichtsender bzw. nur Lichtempfänger mit zugehöriger Elektronik. Es ist auch möglich, Module mit Sender- und Empfängereinheiten auszustatten, wozu beispielsweise Lichtsender und Lichtempfänger abwechselnd angeordnet sind. Die Ausgestaltung der Sender- und/oder Empfängereinheiten in den Modulen entspricht dem für optoelektronische Lichtgitter bekannten Aufbau.

Die einzelnen Module weisen jeweils zwei Übertragerschnittstellen auf, so dass die Module in Reihe zusammengefügt werden können. Die Energieversorgung wird dabei von einem Modul zum nächsten weitergereicht. Die Signal- und Informationsübertragung erfolgt vorzugsweise in einem Bus-System, welches über die Kopplung der Module durch die gesamte Serienanordnung der Module durchgeschleift wird. Da jedes Modul eine selbständig funktionsfähige Einheit darstellt, ist es in Verbindung mit einem solchen Bus-System möglich, die Module in beliebiger Anzahl und Anordnung aneinander zu fügen und zu koppeln. Es kann beispielsweise ein Lichtgitter durch eine Reihe von Sendermodulen und eine entgegengesetzte Reihe von Empfängermodulen aufgebaut sein. Ebenso können Sendermodule und Empfängermodule aneinander anschließen und abwechselnd gekoppelt werden. Dies ergibt einen wesentlichen Vorteil in der Herstellung, da nur einige wenige Grundmodule benötigt werden, mit welchen Lichtgitter aufgebaut werden können, die in Größe und Anordnung den unterschiedlichsten Anforderungen angepasst sind. Jedes Modul kann gesondert auf Funktionsfähigkeit vor dem Einbau getestet werden, was weiter die Produktion vereinfacht und die Zuverlässigkeit verbessert. Auch bei installierten Lichtgittern ermöglicht der modulare Aufbau eine einfache Fehlersuche und eine schnelle und einfache Reparatur durch Auswechseln eines defekten Moduls. Über das Bus-System kann jedes Modul seine Position innerhalb des Gesamtsystems bestimmen und entsprechend durch die Steuerung aktiviert werden. Dies ist sowohl bei einer Installation eines komplizierten Lichtgitters möglich als auch bei einem Umbau oder einem Reparaturaustausch.

Die geometrische Anordnung der aufeinander folgenden Module ist von der Anordnung und Ausbildung der Übertragerschnittstellen abhängig. Sind die Anschlussflächen der Übertragerschnittstellen senkrecht zur Längsachse des Moduls ausgebildet, so lassen sich die Module geradlinig aneinander fügen. Dies ist die einfachste Ausführung eines Lichtgitters. Soll das Lichtgitter zur Anpassung an die räumlichen Gegebenheiten einen abgewinkelten Verlauf aufweisen, so können die Anschlussflächen entsprechend dem zwischen den aufeinanderfolgenden Modulen gewünschten Winkel angeordnet sein. Ist eine hohe Flexibilität in der Ausrichtung der aufeinander folgenden Module erwünscht, so sind vorzugsweise die Gehäuse in der Ebene der Anschlussfläche um eine zu der Anschlussfläche senkrechte Drehachse gegeneinander verdrehbar, um unterschiedliche Winkelstellungen der aufeinander folgenden Module zu realisieren. Da die Module mit ebenen Anschlussflächen aneinander anliegen, bedeutet diese Verdrehbarkeit keine kompliziertere Gehäusestruktur. Es ist lediglich notwendig, dass die Übertragerschnittstelle zu der Drehachse rotationssymmetrisch ausgebildet ist.

In einer bevorzugten Ausführung ist eine induktive Kopplung der Module vorgesehen. Die Übertragerschnittstellen sind dabei jeweils durch einen Teil des Magnetkerns des induktiven Übertragers gebildet. Die Magnetkerne sind in den Gehäusen an der jeweiligen Anschlussfläche so angeordnet, dass sie sich bei einem Aneinanderfügen der Anschlussflächen der zu koppelnden Module zu dem vollständigen Magnetkern des Übertragers ergänzen.

Bei einer kapazitiven Kopplung wird in den Anschlussflächen des Gehäuses jeweils eine Kondensatorplatte angeordnet, so das sich beim aneinander Anlegen der Anschlussflächen diese Kondensatorplatten zu dem Koppelkondensator des kapazitiven Übertragers ergänzen.

Bei einer optischen Kopplung sind Lichtleiter mit ihren Eintritts- bzw. Austrittsflächen in den aneinander anliegenden Anschlussflächen der zu koppelnden Module angeordnet.

Es ist ohne weiteres ersichtlich, dass die Energiespeisung und die Datenkommunikation in gleicher Weise oder auch in unterschiedlicher Weise induktiv, kapazitiv oder optisch gekoppelt sein können. Beispielsweise kann die Energieübertragung durch induktive Kopplung erfolgen, während die Daten- und Informationsübertragung über eine optische Kopplung erfolgt. Es können ebenso eine kapazitive Energieübertragung mit einer optischen Datenübertragung kombiniert werden. Sämtliche andere Kombinationen sind ebenfalls möglich.

Im folgenden wird die Erfindung anhand von in der Zeichnung dargestellten Ausführungsbeispielen näher erläutert. Es zeigen:
- Figur 1: in perspektivischer Ansicht eine erste Ausführungsform eines Moduls für ein Lichtgitter,
- Figur 2: einen vertikalen Teilschnitt durch zwei gekoppelte Module der ersten Ausführung,
- Figur 3: einen vertikalen Teilschnitt der Kopplung zweier Module in einer zweiten Ausführung und
- Figur 4: eine Draufsicht auf die Kopplung zweier Module in der zweiten Ausführung.

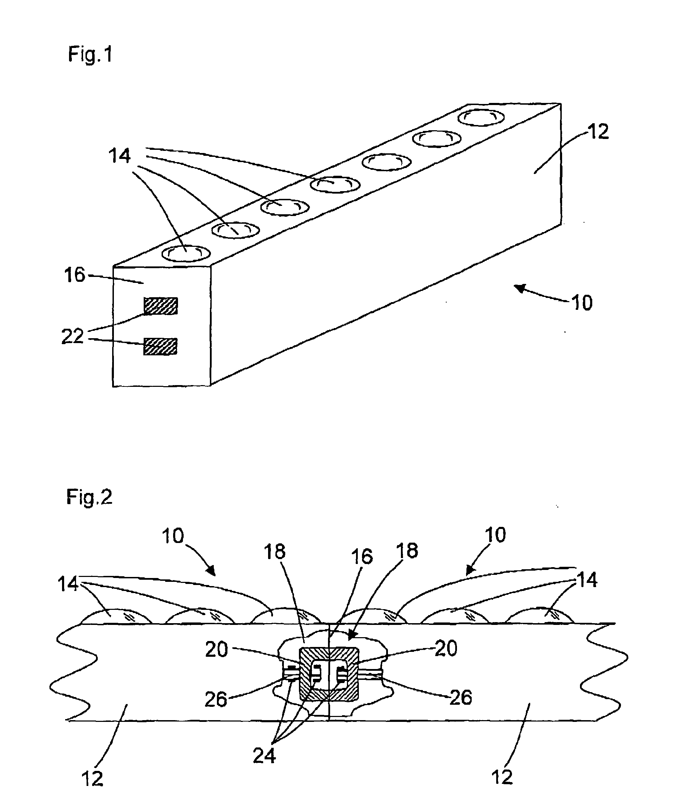

In einer ersten Ausführung wird ein Lichtgitter aus einzelnen Modulen 10 aufgebaut, von denen eines in Figur 1 dargestellt ist.

Das Modul 10 weist ein allseitig geschlossenes quaderförmiges Gehäuse 12 auf, in welchem eine optoelektronische Einheit aufgenommen ist. Die optoelektronische Einheit kann eine Sendereinheit oder eine Empfängereinheit oder eine Kombination von Sender- und Empfängereinheit sein. Solche Sendereinheiten und Empfängereinheiten sind bekannter Stand der Technik. Sie weisen Licht aussendende Senderelemente bzw. Licht empfangende Empfängerelemente auf, sowie eine Elektronik zur Ansteuerung dieser Elemente und zur Auswertung und Weiterleitung der Signale. In dem dargestellten Ausführungsbeispiel ist das Modul 10 mit einem langgestreckten Gehäuse 12 ausgebildet, in welchem mehrere Sender- bzw. Empfängerelemente in einer in Längsrichtung des Gehäuses 12 verlaufenen Reihe angeordnet sind. Von der Sender- bzw. Empfängereinheit sind in Figur 1 nur die jeweiligen Optiken 14 der Sender- bzw. Empfängerelemente sichtbar.

An den beiden Enden des langgestreckten Gehäuses 12 ist jeweils eine geschlossene Stirnfläche des Gehäuses 12 als Anschlussfläche 16 ausgebildet, die als ebene Fläche senkrecht zur Längsachse des Gehäuses 12 verläuft. Sollen mehrere Module 10 zu einem Lichtgitter aneinandergefügt werden, so werden diese Module 10 mit den Anschlussflächen 16 ihrer Gehäuse 12 aneinandergefügt, wobei die Anschlussflächen 16 der aneinander anschließenden Module 10 deckungsgleich aneinander anliegen.

Zur Übertragung der Versorgungsenergie für die Sender-und/oder Empfängereinheiten und für die Übertragung der Daten-und Informationssignale von einem Modul 10 zum folgenden Modul dient ein galvanisch getrennter Übertrager, der im Ausführungsbeispiel der Figuren 1 und 2 als induktiver Übertrager ausgebildet ist. Hierzu weist jedes Modul 10 an seinen beiden Enden an den Anschlussflächen 16 eine Übertragerschnittstelle 18 auf. Die Übertragerschnittstelle 18 ist gebildet durch einen U-förmigen Magnetkern 20, der in dem Gehäuse 12 so angeordnet ist, dass seine beiden Schenkel senkrecht zur Anschlussfläche 16 verlaufen und mit ihren freien Endflächen 22 flächenbündig in der Anschlussfläche 16 liegen. Innerhalb des Gehäuses 12 ist auf dem Magnetkern 20 jeweils eine Übertragerwicklung 24 angebracht. Die Übertragerwicklung 24, die insbesondere das Joch des U-förmigen Magnetkerns 20 umschließt, kann beispielsweise auf einer Leiterplatte 26 angeordnet sein, die in dem Gehäuse 12 angeordnet ist und die Elektronik der Sender- und/oder Empfängereinheit trägt.

Werden zwei Module 10 mit ihren endseitigen Anschlussflächen 16 flächig aneinandergefügt, so kommen die Endflächen 22 der Magnetkerne 20 der Ubertragerschnittstellen 18 der beiden Module 10 in deckungsgleiche Anlage aneinander. Die Magnetkerne 20 der beiden Module 10 fügen sich dadurch zu einem ringförmig geschlossenen Übertrager-Magnetkern zusammen, wie dies Figur 2 zeigt. Die Übertragerwicklungen 24 der Übertragerschnittstellen 18 der aneinanderstoßenden Module 10 bilden somit zusammen mit dem gemeinsamen Übertrager-Magnetkern einen induktiven Übertrager, der die beiden Module 10 miteinander koppelt.

Über diesen Übertrager können einerseits die Daten- und Steuer-Signale übertragen werden. Andererseits wird auch die Versorgungsenergie für die Sender- und/oder Empfängereinheiten über diesen Übertrager übertragen. Hierzu wird beispielsweise eine hochfrequente Wechselspannung, z. B. mit einer Frequenz von etwa 125 kHz verwendet, die gegebenenfalls stochastisch frequenzmoduliert werden kann (Spread Spectrum-Verfahxen).

Sind die Anschlussflächen 16 senkrecht zur Längsachse des Moduls 10 angeordnet, wie dies in den Figuren 1 und 2 dargestellt ist, so können die Module 10 nur geradlinig aneinander angefügt werden. Vorzugsweise sind die jeweils letzten Sender-und/oder Empfängerelemente an den Enden des Moduls 10 mit ihrer Optik 14 in einem solchen Abstand von der Anschlussfläche 16 angeordnet, dass der Abstand der endseitigen Optiken 14 der aneinander anschließenden Module 10 dem Rasterabstand der Optiken 14 in den Modulen 10 entspricht. Das Lichtgitter setzt sich dann mit gleichbleibendem Rasterabstand von einem Modul zum folgenden Modul fort, ohne dass an der Übergangsstelle von einem Modul 10 zum folgenden Modul 10 ein Auflösungsverlust des Lichtgitters auftritt.

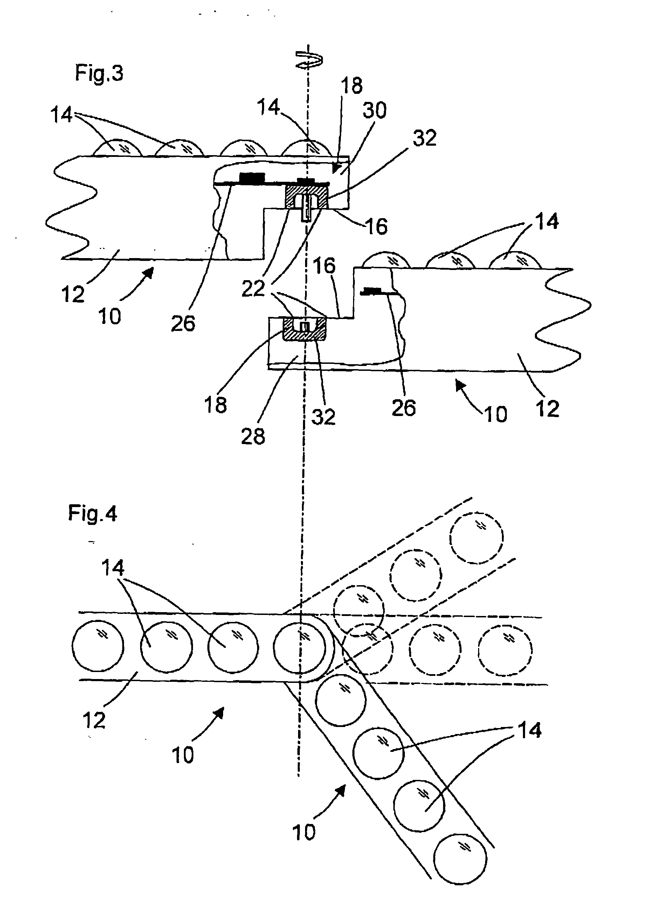

In den Figuren 3 und 4 ist eine zweite Ausführung der Kopplung der Module 10 zu einem Lichtgitter dargestellt. Soweit dieses zweite Ausführungsbeispiel mit dem ersten übereinstimmt, sind dieselben Bezugszahlen verwendet und auf die vorangehende Beschreibung wird Bezug genommen.

Bei dem Ausführungsbeispiel der Figuren 3 und 4 weisen die Gehäuse 12 der Module 10 an ihren Enden Anschlussflächen 16 auf, die parallel zur Längsachse des Gehäuses 12 verlaufen und senkrecht zur Strahlrichtung der Optiken 14. Hierzu weisen die Gehäuse 10 jeweils an ihrem einen Ende einen an der Unterseite überragenden Vorsprung 28 und an dem anderen Ende einen an der Oberseite überragenden Vorsprung 30 auf. Der untere Vorsprung 28 am einen Ende und der obere Vorsprung 30 am anderen Ende der Gehäuse 12 sind so komplementär zueinander ausgebildet, dass sich die Vorsprünge 28 und 30 der aneinander anschließenden Module 10 gegenseitig übergreifen und zur Gesamthöhe der Gehäuse 12 ergänzen. Dabei sind die jeweiligen Anschlussflächen 16 an der Oberseite des unteren Vorsprungs 28 und an der Unterseite des oberen Vorsprungs 30 jeweils parallel zur Längsachse des Gehäuses 12 ausgebildet. Dies ist in Figur 3 erkennbar, in der das eine Modul 10 von dem folgenden Modul 10 nach oben abgehoben dargestellt ist.

In den Gehäusen 12 sind jeweils in den Vorsprüngen 28 und 30 Übertragerschnittstellen 18 eines induktiven Übertragers angeordnet. Die Ubertragerschnittstellen weisen jeweils einen Magnetkern 32 auf, der als rotationssymmetrischer Topfkern oder Schalenkern ausgebildet ist. Der geschlossene Boden der jeweiligen Magnetkerne 32 befindet sich im Inneren des Gehäuses 12, während an der Anschlussfläche 16 flächenbündig die rotationssymmetrischen freien Flächen des topfförmigen Mantels und des Mittelzapfens des Magnetkerns 32 frei liegen. Innerhalb des Gehäuses 12 sitzt auf den Magnetkernen 32 jeweils die Übertragerwicklung, die vorzugsweise an die Leiterplatte 26 angeschlossen ist. Werden beim Aneinanderfügen der Module 10 die Anschlussflächen 16 aufeinander gesetzt, so fügen sich die freien Stirnflächen der Magnetkerne 32 der Übertragerschnittstellen 18 aneinander, so dass sich ein geschlossener Übertrager-Magnetkern bildet, dessen eine Übertragerwicklung in dem einen Modul und dessen andere Übertragerwicklung in dem anderen Modul angeordnet ist. Da der Magnetkern 32 rotationssymmetrisch ausgebildet ist, können die Module 10 gegeneinander verschwenkt werden, wie dies in Figur 4 zu sehen ist, wobei die Drehachse die Rotationsachse des Übertragers ist. Die aneinander anschließenden Module 10 können auf diese Weise eine beliebige Stellung zu einander einnehmen. Der Mittelzapfen des Magnetkerns 32 der einen Übertragerschnzttstelle 18 kann dabei über die Anschlussfläche 16 überstehen, während der Mittelzapfen des Magnetkerns 32 der entgegengesetzten Übertragerschnittstelle 18 in die Anschlussfläche 16 versenkt ist. Die zusammengesteckten Mittelzapfen können somit gleichzeitig das Drehlager für die Schwenkbewegung der Module 10 bilden.

Wie in Figur 3 gezeigt ist, ist vorzugsweise die endseitig letzte Optik 14 an einem Ende der Module 10 auf dem oberen Vorsprung 30 achsmittig zur Drehachse angeordnet. Auf diese Weise lassen sich auch hier die Module 10 aneinander fügen, ohne dass sich an der Verbindungsstelle eine Unterbrechung des Rasterabstandes der Optiken 14 ergibt.

### Bezugszeichenliste

- 10: Module
- 12: Gehäuse
- 14: Optik
- 16: Anschlussfläche
- 18: Übertragerschnittstelle
- 20: Magnetkern
- 22: Endflächen
- 24: Übertragerwicklung
- 26: Leiterplatte
- 28: Vorsprung unten
- 30: Vorsprung oben
- 32: Magnetkern

## Patentansprüche

1. Lichtgitter, das aus einzelnen Modulen (10) aufbaubar ist, wobei jedes Modul (10) eine selbständig funktionsfähige Sender- und/oder Empfängereinheit in einem geschlossenen Gehäuse (12) bildet und wobei die Module (10) zur Energie- und/oder Signalübertragung in Serie miteinander koppelbar sind,
**dadurch gekennzeichnet, dass** die Module (10) galvanisch getrennt koppelbar sind.

2. Lichtgitter nach Anspruch 1,
**dadurch gekennzeichnet, dass** die Module (10) induktiv koppelbar sind.

3. Lichtgitter nach Anspruch 1,
**dadurch gekennzeichnet, dass** die Module (10) kapazitiv koppelbar sind.

4. Lichtgitter nach Anspruch 1,
**dadurch gekennzeichnet, dass** die Module (10) optisch koppelbar sind.

5. Lichtgitter nach einem der Ansprüche 1 bis 4,
**dadurch gekennzeichnet, dass** die Module (10) an entgegengesetzten Enden ihres Gehäuses (12) jeweils eine Obertragerschnittstelle (18) aufweisen, dass miteinander zu koppelnde Module (10) mit den Enden ihrer Gehäuse (12) derart aneinander anschließend zusammengefügt werden, dass die jeweiligen Llbertragerschnittstellen (18) dieser Enden aneinander anliegen und sich zu einem Übertrager ergänzen.

6. Lichtgitter nach Anspruch 5,
**dadurch gekennzeichnet, dass** die Übertragerschnittstellen (18) in Anschlussflächen (16) des Gehäuses (12) angeordnet sind, wobei die Anschlussflächen (16) miteinander zu koppelnder Module (10) flächig aneinander anliegen.

7. Lichtgitter nach Anspruch 5 oder 6,
**dadurch gekennzeichnet, dass** die Gehäuse (12) der Module (10) langgestreckt sind und wenigstens zwei Sender- und/oder Empfängerelemente aufweisen, die parallel zur Längsachse des Gehäuses (12) in einer Reihe angeordnet sind.

8. Lichtgitter nach Anspruch 6 und 7,
**dadurch gekennzeichnet, dass** die Anschlussflächen (16) unter einem Winkel zu der Längsachse des Gehäuses (10) angeordnet sind.

9. Lichtgitter nach Anspruch 6 und 7,
**dadurch gekennzeichnet, dass** die Anschlussflächen (16) parallel zur Längsachse des Gehäuses (12) angeordnet sind und die Enden der aneinander anschließenden Gehäuse (12) sich im Bereich der Anschlussflächen (16) übergreifen.

10. Lichtgitter nach einem der Ansprüche 7 bis 9,
**dadurch gekennzeichnet, dass** die aneinander anschließenden Gehäuse (12) in der Ebene der Anschlussflächen (16) gegeneinander verdrehbar sind und dass die Übertrager zu einer zu den Anschlussflächen (16) senkrechten Drehachse rotationssymmetrisch sind.

## Claims

1. Light grid which can be constructed from individual modules (10), wherein each module (10) forms an independently functional transmitter and/or receiver unit in a closed housing (12) and wherein the modules (10) can be coupled to one another in series for power and/or signal transmission, **characterised in that** the modules (10) can be coupled in a galvanically isolated manner.

2. Light grid according to claim 1, **characterised in that** the modules (10) can be coupled inductively.

3. Light grid according to claim 1, **characterised in that** the modules (10) can be coupled capacitively.

4. Light grid according to claim 1, **characterised in that** the modules (10) can be coupled optically.

5. Light grid according to one of claims 1 to 4, **characterised in that** the modules (10) have in each case a transducer interface (18) at opposite ends of their housing (12), **in that** modules (10) which are to be coupled to one another are assembled so as to adjoin one another by the ends of their housings (12) in such a way that the respective transducer interfaces (18) of these ends bear against one another and complement one another so as to form a transducer.

6. Light grid according to claim 5, **characterised in that** the transducer interfaces (18) are arranged in connection faces (16) of the housing (12), wherein the connection faces (16) of modules (10) which are to be coupled to one another bear flat against one another.

7. Light grid according to claim 5 or 6, **characterised in that** the housings (12) of the modules (10) are elongate and have at least two transmitter and/or receiver elements which are arranged in a row parallel to the longitudinal axis of the housing (12).

8. Light grid according to claim 6 and 7, **characterised in that** the connection faces (16) are arranged at an angle with respect to the longitudinal axis of the housing (10).

9. Light grid according to claim 6 and 7, **characterised in that** the connection faces (16) are arranged parallel to the longitudinal axis of the housing (12) and the ends of the adjoining housings (12) overlap in the region of the connection faces (16).

10. Light grid according to one of claims 7 to 9, **characterised in that** the adjoining housings (12) are rotatable relative to one another in the plane of the connection faces (16), and **in that** the transducers are rotationally symmetrical with respect to an axis of rotation perpendicular to the connection faces (16).

## Revendications

1. Barrière lumineuse composée de différents modules (10),
- chaque module (10) ayant une unité d'émission et/ou de réception fonctionnant indépendamment, dans un boîtier fermé (12), et
- les modules (10) étant couplés en série pour la transmission de l'énergie et/ou des signaux,
**caractérisée en ce que**
les modules (10) sont couplés en étant séparés galvaniquement.

2. Barrière lumineuse selon la revendication 1,
**caractérisée en ce que**
les modules (10) sont couplés par une liaison inductive.

3. Barrière lumineuse selon la revendication 1,
**caractérisée en ce que**
les modules (10) sont couplés par une liaison capacitive.

4. Barrière lumineuse selon la revendication 1,
**caractérisée en ce que**
les modules (10) sont couplés par une liaison optique.

5. Barrière lumineuse selon l'une des revendications 1 à 4,
**caractérisée en ce que**
- les modules (10) comportent une interface de transmission (18) aux extrémités opposées de leur boîtier (12),
- les modules (10) à coupler sont assemblés par les extrémités de leur boîtier (12) adjacent de façon que les interfaces respectives (18) des extrémités soient appliquées l'une contre l'autre et se complètent pour former un transformateur.

6. Barrière lumineuse selon la revendication 5,
**caractérisée en ce que**
- les interfaces (18) sont prévues dans les surfaces de raccordement (16) du boîtier (12),
- les surfaces de raccordement (16) sont appliquées en surface l'une contre l'autre pour les modules (10) à coupler.

7. Barrière lumineuse selon les revendications 5 ou 6,
**caractérisée en ce que**
les boîtiers (12) des modules (10) sont allongés et comportent au moins chaque fois deux éléments d'émission et/ou de réception, installés parallèlement à l'axe longitudinal du boîtier (12) en série.

8. Barrière lumineuse selon les revendications 6 et 7,
**caractérisée en ce que**
les surfaces de raccordement (16) font un angle par rapport à l'axe longitudinal du boîtier (10).

9. Barrière lumineuse selon les revendications 6 et 7,
**caractérisée en ce que**
les surfaces de raccordement (16) sont installées parallèlement à l'axe longitudinal du boîtier (12) et les extrémités des boîtiers (12) à raccorder se chevauchent au niveau des surfaces de raccordement (16).

10. Barrière lumineuse selon l'une des revendications 7 à 9,
**caractérisée en ce que**
- les boîtiers (12) à raccorder les uns aux autres sont montés de façon à pouvoir tourner l'un par rapport à l'autre dans le plan des surfaces de raccordement (16), et
- les transformateurs sont symétriques en rotation par rapport à un axe de rotation perpendiculaire aux surfaces de raccordement de surfaces (16).
